(19) Europäisches Patentamt
European Patent Office
Office européen des brevets

(11) **EP 3 025 094 B1**

(12) **FASCICULE DE BREVET EUROPEEN**

(45) Date de publication et mention
de la délivrance du brevet:
**02.05.2018 Bulletin 2018/18**

(51) Int Cl.:
**F21V 8/00** *(2006.01)* **B60Q 3/00** *(2017.01)*
**B60Q 3/64** *(2017.01)* **B60Q 3/283** *(2017.01)*

(21) Numéro de dépôt: **14758591.3**

(22) Date de dépôt: **24.07.2014**

(86) Numéro de dépôt international:
**PCT/FR2014/000175**

(87) Numéro de publication internationale:
**WO 2015/011347 (29.01.2015 Gazette 2015/04)**

(54) **DISPOSITIF LUMINEUX**

BELEUCHTUNGSVORRICHTUNG

LIGHTING DEVICE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **25.07.2013 FR 1301794**

(43) Date de publication de la demande:
**01.06.2016 Bulletin 2016/22**

(73) Titulaire: **Valeo Systemes Thermiques
78320 Le Mesnil Saint Denis (FR)**

(72) Inventeur: **THORAILLER, Maryline
F-78320 Le Mesnil Saint Denis (FR)**

(74) Mandataire: **Pothmann, Karsten
Valeo Comfort and Driving Assistance
Propriété Industrielle
76 rue Auguste Perret
ZI Europarc
94046 Creteil Cedex (FR)**

(56) Documents cités:
FR-A1- 2 827 114          US-A- 5 555 161
US-A1- 2007 009 210

EP 3 025 094 B1

**Description**

La présente invention concerne un dispositif lumineux, notamment pour véhicule automobile. L'invention se rapporte également à une source d'éclairage comprenant un dispositif lumineux selon l'invention ainsi qu'à un pommeau de vitesse d'un véhicule automobile comprenant un dispositif lumineux selon l'invention.

Le nombre de dispositifs lumineux présents dans l'habitacle des véhicules automobiles augmente avec la sophistication de ces derniers.

Les sources d'éclairage les plus couramment utilisées sont typiquement des diodes électroluminescentes qui sont monochromatiques avec des variétés de couleurs disponibles assez limitées. Il existe des diodes électroluminescentes polychromatiques, mais elles sont généralement très onéreuses et offrent peu de choix en termes de puissance.

Il existe des dispositifs permettant à partir d'une pluralité de sources de lumière de couleurs différentes de mélanger les faisceaux issus de ces sources pour essayer d'obtenir un faisceau ayant la couleur souhaitée.

Ces dispositifs utilisent des lames semi réfléchissantes afin de mélanger les faisceaux issus de chaque source lumineuse. Outre un coût important, ce type de dispositif présente une fragilité et un encombrement qui peut être incompatible avec une utilisation comme témoin lumineux dans un véhicule automobile.

Finalement, les faisceaux obtenus avec ces types de dispositifs sont généralement inhomogènes. Le document US2007/0009210 décrit un système d'éclairage à LED comprenant une fibre hélicoïdale. Ainsi, il existe un besoin pour fournir un dispositif lumineux permettant un mélange homogène d'au moins deux faisceaux lumineux dont le coût, les dimensions et la solidité seraient compatibles avec une utilisation comme témoin lumineux dans un véhicule automobile.

L'invention propose ainsi un dispositif lumineux comprenant :

- au moins deux sources de lumière,
- au moins deux guides de captage de lumière associés aux sources de lumière, chacun des guides de captage étant associé à une source de lumière distincte,
- un collecteur de lumière associé aux guides de captage de lumière,

remarquable en ce que
chacun des guides de captage comprend une extrémité d'entrée disposée face à la source de lumière qui lui est associée et une extrémité de sortie pénétrant tangentiellement dans le collecteur de lumière de sorte à amener un faisceau de lumière issue de la source de lumière associée dans le collecteur, et en ce que les guides de captage présentent entre les extrémités d'entrée et de sortie une forme hélicoïdale.

Avantageusement, la configuration des guides de captage du dispositif lumineux selon l'invention permet d'obtenir un éclairage homogène au niveau du collecteur de lumière.

En particulier, la forme hélicoïdale des guides de captage permet d'augmenter le chemin optique des rayons lumineux issus des sources de lumière tout en limitant l'encombrement du dispositif lumineux.

De plus les extrémités d'entrée des guides de captage pénétrant tangentiellement dans le collecteur, le couplage entre ces guides et le collecteur est grandement amélioré.

Le dispositif selon l'invention peut également comprendre une ou plusieurs des caractéristiques ci-dessous, considérées individuellement ou selon toutes les combinaisons techniquement possibles :

- le collecteur comprend une extrémité d'entrée dans laquelle pénètrent les extrémités de sortie des guides de captage et une extrémité de sortie comprenant une pluralité d'éléments dispersifs de lumière ; et/ou

- le collecteur de lumière comprend un corps cylindrique de révolution ; et/ou

- les guides de captage présentent une forme hélicoïdale autour de l'axe du corps cylindrique du collecteur ; et/ou

- les sources de lumière sont équiréparties sur un cercle centré sur l'axe du corps cylindrique du collecteur ; et/ou

- les guides de captage ont sensiblement tous la même dimension selon l'axe du corps cylindrique ; et/ou

- $H \geq \dfrac{3}{2}h$, avec

H la dimension du dispositif lumineux selon l'axe du corps cylindrique, et
h la distance selon l'axe du corps cylindrique entre les extrémités d'entrée et de sortie des guides de captage de lumière ; et/ou

- le dispositif comprend au moins trois sources de lumière chacune associées à un guide de captage distinct ; et/ou

- chacune des sources de lumière comprend au moins une diode électroluminescente disposée en regard du guide de lumière associé ; et/ou

- les sources de lumière émettent dans des gammes de longueur d'onde différentes les unes des autres ; et/ou

- les angles des hélicoïdes formant les guides de captage sont sensiblement égaux entre eux et supérieurs ou égaux à 40° et inférieurs ou égaux à 50° ; et/ou

- le collecteur de lumière et les guides de captage sont monoblocs.

L'invention se rapporte également à une source d'éclairage destinée notamment à un véhicule automobile, comprenant un dispositif lumineux selon l'invention.

L'invention se rapporte en outre à un pommeau de vitesse d'un véhicule automobile comprenant un dispositif lumineux selon l'invention.

L'invention sera mieux comprise à la lumière de la description suivante qui n'est donnée qu'à titre indicatif et qui n'a pas pour but de la limiter, accompagnée des figures ci-jointes:

- la figure 1 illustre de façon schématique, une vue de côté d'un dispositif lumineux selon l'invention, et
- la figure 2 illustre de façon schématique une vue de dessus du dispositif lumineux représenté à la figure 1, le dispositif lumineux étant représenté avec des trajets de rayons lumineux.

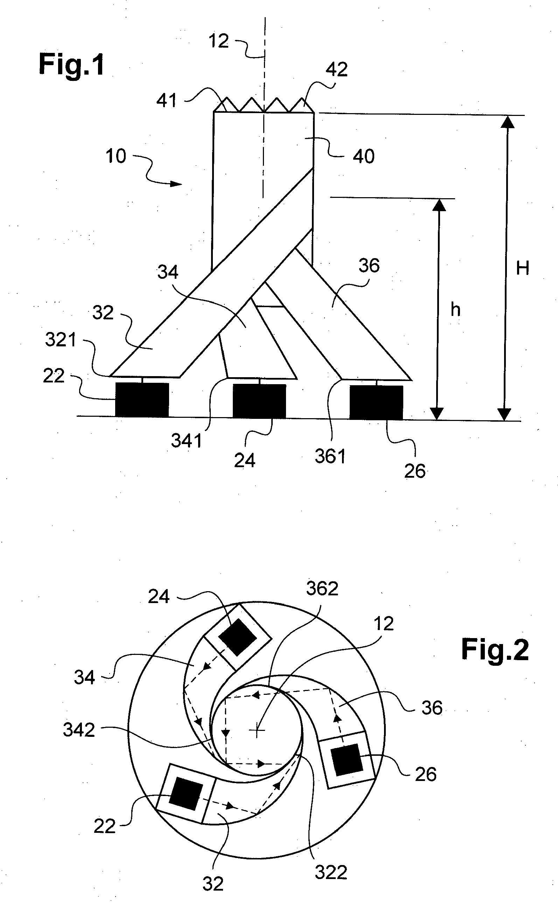

Selon le mode de réalisation représenté aux figures 1 et 2, l'invention concerne un dispositif lumineux 10 comprenant trois sources lumineuses 22, 24, 26, trois guides de captage de lumière 32, 34, 36 et un collecteur de lumière 40.

Chacun des guides de captage de lumière est associé à une source de lumière distincte. Ainsi, le guide de captage de lumière 32 est associé à la source de lumière 22, le guide de captage 34 est associé à la source de lumière 24 et le guide de captage 36 est associé à la source de lumière 26.

De plus, le collecteur de lumière 40 est associé à l'ensemble des guides de captage de lumière 32, 34 et 36.

De préférence, le collecteur de lumière 40 et les guides de captage de lumière 32, 34 et 36 sont monoblocs et/ou formés d'une seule matière. Ainsi, les rayons lumineux se propagent naturellement par réflexion totale à l'intérieur des guides de captage 32, 34, 36 et du collecteur de lumière 40, sans obstacle ou séparation entre des parois qui pourraient nuire à la circulation des rayons lumineux.

Selon le mode de réalisation des figures 1 et 2, le dispositif lumineux 10 présente une symétrie de révolution autour d'un axe de symétrie 12.

Les sources de lumière 22, 24, 26 sont de préférence équiréparties sur un cercle perpendiculaire à l'axe de symétrie 12 et dont le centre passe par l'axe de symétrie 12. Les sources de lumière 22, 24, 26 comprennent de préférence une ou plusieurs diodes électroluminescentes disposées par exemple sur un support de type PCB, en particulier un support de type substrats métalliques isolés. La ou les diodes électroluminescentes peuvent être remplacées par une source lumineuse équivalente, de type OLED, AOLED ou encore FOLED.

Le dispositif lumineux selon l'invention est particulièrement avantageux lorsque les sources de lumière 22, 24, 26 émettent à des longueurs d'ondes différentes les unes des autres. Par exemple, la source de lumière 22 peut émettre à des longueurs d'onde correspondant à la couleur bleue, la source de lumière 24 peut émettre à des longueurs d'onde correspondant à la couleur rouge et la source de lumière 26 peut émettre à des longueurs d'onde correspondant à la couleur verte.

Comme expliqué plus en détail ci-après, le dispositif selon l'invention permet un mélange des rayons lumineux issus de chacune des sources de lumière 22, 24, 26 et permet ainsi d'obtenir en sortie du dispositif lumineux selon l'invention un faisceau lumineux ayant la couleur désirée issue du mélange des rayons lumineux émis par les différentes sources.

Chacune des sources de lumière 22, 24, 26 est associées à un guide de captage 32, 34, 36.

En particulier, chacune des sources de lumière 22, 24, 26 est disposée en regard d'une extrémité d'entrée 321, 341, 361 d'un guide de captage 32, 34, 36.

Selon un mode de réalisation, les extrémités d'entrée 321, 341, 361 des guides de captage 32, 34, 36 comprennent, au moins un élément dispersif de lumière (non représenté), par exemple sous la forme d'au moins une lentille hémicylindrique. Avantageusement, ces éléments dispersifs permettent d'augmenter le nombre de rayons lumineux issus de chacune des sources de lumière 22, 24, 26 pénétrant dans chacun des guides de captage 32, 34, 36 par les extrémités d'entrée 321, 341, 360.

Chacun des guides de captage 32, 34, 36 comprend en plus d'une extrémité d'entrée une extrémité de sortie 322, 342, 362. Chacune des extrémités de sortie 332, 342, 362 des guides de captage 32, 34, 36 pénètre tangentiellement dans le collecteur de lumière 40.

Autrement dit, pour chacun des guides de captage, la tangente audit guide de captage au niveau de son extrémité de sortie est sensiblement parallèle à la tangente du collecteur de lumière 40 dans la zone où ladite extrémité de sortie pénètre dans le collecteur de lumière.

Comme illustré à la figure 2, les guides de captage 32, 34, 36 présentent entre leurs extrémités d'entrée 321, 341, 361 et leurs extrémités de sortie 322, 342, 362, une forme hélicoïdale autour de l'axe de symétrie 12 du dispositif lumineux.

De préférence, les angles des hélicoïdales formant les guides de captage 32, 34, 36 sont sensiblement égaux entre eux. Avantageusement, cela permet d'assurer que les rayons lumineux issus de chacune des sources de lumière 22, 24, 26 se propagent au travers des guides de captage de lumière 32, 34, 36 de manière sensiblement identique. Avantageusement, cela permet d'obtenir une meilleure homogénéité du mélange des rayons lumineux à la sortie du dispositif lumineux selon l'invention.

Afin de limiter les pertes de rayons lumineux lors de leurs propagation dans les guides de captage de lumière, les angles des hélicoïdales formant les guides de captage 32, 34, 36 sont de préférence supérieurs ou égaux à 40° et inférieurs ou égaux à 40°. Ainsi, comme illustré sur la figure 2, les rayons lumineux issus des sources de lumière 22, 24, 26 se propagent des extrémités d'entrée 321, 341, 346 des guides de captage vers les extrémités de sortie 322, 342, 362 par réflexion totale sur les parois desdits guides de captage de lumière 32, 34, 36. Bien que les guides de captage soient conformés de sorte à permettre une réflexion totale des rayons lumineux se propageant à l'intérieur desdits guides de captage, certains rayon lumineux peuvent ne pas être totalement réfléchis, en particulier à cause de l'état de surface des guides de captage.

Comme illustré sur la figure 1, les guides de captage de lumière 32, 34, 36 sont associés au collecteur de lumière 40. En particulier, les extrémités de sortie 322, 342, 362 des guides de captage pénètrent dans le collecteur de lumière 40 au niveau de l'extrémité d'entrée dudit collecteur de lumière 40.

Le collecteur de lumière 40 comprend outre une extrémité d'entrée, une extrémité de sortie 41. L'extrémité de sortie 41 du collecteur de lumière 40 peut comprendre une pluralité d'éléments dispersifs de lumière 42, par exemple, sous forme de lentilles hémicylindriques.

Avantageusement, ces éléments dispersifs de lumière 42 permettent de disperser la lumière sortant du collecteur de lumière 40 rendant ainsi la répartition de lumière en sortie du dispositif lumineux 10 plus homogène.

Le collecteur de lumière 40 présente de préférence une symétrie de révolution autour de l'axe de symétrie 12 du dispositif lumineux. Par exemple, comme illustré sur les figures 1 et 2, le collecteur de lumière 40 comprend un corps cylindrique de révolution autour de l'axe de symétrie 12 du dispositif lumineux 10.

Comme illustré à la figure 1, les guides de captage de lumière 32, 34, 36 ont sensiblement tous la même dimension selon l'axe de symétrie 12. Autrement dit, chacun des guides de captage de lumière 32, 34, 36 pénètrent le collecteur de lumière 40 sensiblement à la même hauteur h. Avantageusement, une telle configuration permet d'assurer une bonne homogénéité entre les rayons lumineux issus des différentes sources de lumière 22, 24, 26. En effet, l'ensemble des rayons lumineux issus des différentes sources de lumière 22, 24, 26 parcourent ainsi sensiblement la même distance à l'intérieur des différents guides de captage de lumière 32, 34, 36 avant de pénétrer avec sensiblement le même angle dans le collecteur de lumière 40.

Selon un mode de réalisation préférée de l'invention, la dimension H du dispositif lumineux selon l'axe de symétrie 12 est supérieure ou égale à 3/2*h, avec h la distance selon l'axe de symétrie 12 entre les extrémités d'entrée 321, 341, 361 et de sortie 322, 342, 362 des guides de captage de lumière 32, 34, 36.

Pour les applications les plus courantes, en particulier dans le cadre d'un véhicule automobile, la dimension H du dispositif selon l'invention est de l'ordre de 15mm et la distance h selon l'axe de symétrie 12 entre les extrémités d'entrée 321, 341, 361 de sortie 322, 342, 362 des guides de captage de lumière 32, 34, 36 est de l'ordre de 10 mm.

Ainsi, le dispositif lumineux selon l'invention permet en particulier grâce à la forme hélicoïdale des guides de captage d'augmenter le chemin optique des rayons lumineux issus des sources de lumière 22, 24, 26 tout en conservant un encombrement réduit du dispositif lumineux.

Enfin, il est bien entendu que de nombreuses adaptations du dispositif lumineux 10 selon l'invention qui a été décrit en détail ci-dessus peuvent être introduites, tout en conservant certains au moins des avantages de l'invention. En particulier, le nombre de sources de lumière et de guides de captage n'est pas limité à trois comme dans l'exemple décrit en détail en référence aux figures 1 et 2. Typiquement, le dispositif lumineux selon l'invention peut comprendre deux sources de lumières associées à deux guides de captage.

**Revendications**

1. Dispositif lumineux (10) comprenant :

   - au moins deux sources de lumière (22, 24, 26),
   - au moins deux guides de captage de lumière (32, 34, 36) associés aux sources de lumière, chacun des guides de captage étant associé à une source de lumière distincte,
   - un collecteur de lumière (40) associé aux guides de captage de lumière,

   **caractérisé en ce que**
   chacun des guides de captage comprend une extrémité d'entrée (321, 341, 361) disposée face à la source de lumière qui lui est associée et une extrémité de sortie (322, 342, 362) pénétrant tangentiellement dans le collecteur de lumière de sorte à amener un faisceau de lumière issue de la source de lumière associée dans le collecteur, et **en ce que** les guides de captage (32, 34, 36) présentent entre les extrémités d'entrée et de sortie une forme hélicoïdale.

2. Dispositif lumineux selon la revendication 1, dans lequel le collecteur de lumière (40) comprend une extrémité d'entrée dans laquelle pénètrent les extrémités de sortie des guides de captage et une extrémité de sortie (41) comprenant une pluralité d'éléments dispersifs de lumière (42).

3. Dispositif lumineux selon l'une des revendications 1 ou 2, dans lequel le collecteur de lumière (40) comprend un corps cylindrique de révolution.

4. Dispositif lumineux selon la revendication 3, dans lequel les guides de captage (32, 34, 36) présentent une forme hélicoïdale autour de l'axe du corps cylindrique du collecteur.

**5.** Dispositif lumineux selon l'une des revendications 3 ou 4, dans lequel les sources de lumière (22, 24, 26) sont équiréparties sur un cercle centré sur l'axe du corps cylindrique du collecteur.

**6.** Dispositif lumineux selon l'une des revendications 3 à 5, dans lequel les guides de captage (32, 34, 36) ont sensiblement tous la même dimension selon l'axe du corps cylindrique.

**7.** Dispositif lumineux selon la revendication 6, dans lequel

$$H \geq \frac{3}{2}h,$$

avec

H la dimension du dispositif lumineux selon l'axe du corps cylindrique, et

h la distance selon l'axe du corps cylindrique entre les extrémités d'entrée et de sortie des guides de captage de lumière.

**8.** Dispositif lumineux selon l'une quelconque des revendications précédentes comprenant au moins trois sources de lumière (22, 24, 26) chacune associées à un guide de captage distinct (32, 34, 36).

**9.** Dispositif lumineux selon l'une quelconques des revendications précédentes, dans lequel chacune des sources de lumière comprend au moins une diode électroluminescente disposée en regard du guide de lumière associé.

**10.** Dispositif lumineux selon l'une quelconques des revendications précédentes, dans lequel les sources de lumière émettent dans des gammes de longueur d'onde différentes les unes des autres.

**11.** Dispositif lumineux selon l'une quelconques des revendications précédentes, dans lequel les angles des hélicoïdes formant les guides de captage (32, 34, 36) sont sensiblement égaux entre eux et supérieurs ou égaux à 40° et inférieurs ou égaux à 50°.

**12.** Dispositif lumineux selon l'une quelconque des revendications précédentes, dans lequel le collecteur de lumière (40) et les guides de captage (32, 34, 36) sont monoblocs.

**13.** Source d'éclairage comprenant un dispositif lumineux (10) selon l'une quelconque des revendications précédentes.

**14.** Pommeau de vitesse d'un véhicule automobile comprenant un dispositif lumineux (10) selon l'une quelconque des revendications 1 à 12.

**Patentansprüche**

**1.** Leuchtvorrichtung (10), die Folgendes umfasst:

- wenigstens zwei Lichtquellen (22, 24, 26),
- wenigstens zwei Lichteinfangleiter (32, 34, 36), die den Lichtquellen zugeordnet sind, wobei jeder der Einfangleiter einer unterschiedlichen Lichtquelle zugeordnet ist, und
- einen Lichtsammler (40), der den Lichteinfangleitern zugeordnet ist,

**dadurch gekennzeichnet, dass**
jeder der Einfangleiter ein Eingangsende (321, 341, 361), das gegenüber der ihm zugeordneten Lichtquelle angeordnet ist, und ein Ausgangsende (322, 342, 362), das tangential in den Lichtsammler eindringt, derart, dass ein von der zugeordneten Lichtquelle ausgegebenes Lichtstrahlenbündel in den Sammler eingeleitet wird, besitzt und dass die Einfangleiter (32, 34, 36) zwischen dem Eingangs- und dem Ausgangsende eine Schraubenlinienform aufweisen.

**2.** Leuchtvorrichtung nach Anspruch 1, wobei der Lichtsammler (40) ein Eingangsende, in das die Ausgangsenden der Einfangleiter eindringen, und ein Ausgangsende (41), das mehrere lichtstreuende Elemente (42) aufweist, umfasst.

**3.** Leuchtvorrichtung nach einem der Ansprüche 1 oder 2, wobei der Lichtsammler (40) einen rotationssymmetrischen zylindrischen Körper umfasst.

**4.** Leuchtvorrichtung nach Anspruch 3, wobei die Einfangleiter (32, 34, 36) eine Schraubenlinienform um den zylindrischen Körper des Sammlers besitzen.

**5.** Leuchtvorrichtung nach einem der Ansprüche 3 oder 4, wobei die Lichtquellen (22, 24, 26) auf einem Kreis, der auf die Achse des zylindrischen Körpers des Sammlers zentriert ist, gleich verteilt sind.

**6.** Leuchtvorrichtung nach einem der Ansprüche 3 bis 5, wobei alle Einfangleiter (32, 34, 36) in Richtung der Achse des zylindrischen Körpers im Wesentlichen die gleiche Abmessung besitzen.

**7.** Leuchtvorrichtung nach Anspruch 6, wobei gilt:

$$H \geq 3/2\ h,$$

wobei

H die Abmessung der Leuchtvorrichtung längs der Achse des zylindrischen Körpers ist und

h der Abstand in Richtung der Achse des zylindrischen Körpers zwischen dem Eingangs- und dem Ausgangsende der Lichteinfangleiter ist.

8. Leuchtvorrichtung nach einem der vorhergehenden Ansprüche, die wenigstens drei Lichtquellen (22, 24, 26) umfasst, wovon jede einem unterschiedlichen Einfangleiter (32, 34, 36) zugeordnet ist.

9. Leuchtvorrichtung nach einem der vorhergehenden Ansprüche, wobei jede der Lichtquellen wenigstens eine Leuchtdiode enthält, die gegenüber dem zugeordneten Lichtleiter angeordnet ist.

10. Leuchtvorrichtung nach einem der vorhergehenden Ansprüche, wobei die Lichtquellen in voneinander verschiedenen Wellenlängenbereichen emittieren.

11. Leuchtvorrichtung nach einem der vorhergehenden Ansprüche, wobei die Winkel der Schraubenlinien, die die Einfangleiter (32, 34, 36) bilden, zueinander im Wesentlichen gleich und größer oder gleich 40° und kleiner oder gleich 50° sind.

12. Leuchtvorrichtung nach einem der vorhergehenden Ansprüche, wobei der Lichtsammler (40) und die Einfangleiter (32, 34, 36) einteilig ausgebildet sind.

13. Beleuchtungsquelle, die eine Leuchtvorrichtung (10) nach einem der vorhergehenden Ansprüche enthält.

14. Schalthebelknauf eines Kraftfahrzeugs, der eine Leuchtvorrichtung (10) nach einem der Ansprüche 1 bis 12 enthält.

**Claims**

1. Lighting device (10) comprising:

   - at least two light sources (22, 24, 26),
   - at least two light capture guides (32, 34, 36) associated with the light sources, each of the capture guides being associated with a separate light source, and
   - a light collector (40) associated with the light capture guides,

   **characterized in that**
   each of the capture guides comprises an input end (321, 341, 361) placed facing the light source associated with it, and an output end (322, 342, 362) penetrating tangentially into the light collector so as to convey a light beam emitted from the associated light source into the collector, and **in that** the capture guides (32, 34, 36) have a helical shape between their input and output ends.

2. Lighting device according to Claim 1, wherein the light collector (40) comprises an input end into which the output ends of the capture guides penetrate, and an output end (41) comprising a plurality of light dispersing elements (42).

3. Lighting device according to either of Claims 1 and 2, wherein the light collector (40) comprises a cylindrical body of revolution.

4. Lighting device according to Claim 3, wherein the capture guides (32, 34, 36) have a helical shape around the axis of the cylindrical body of the collector.

5. Lighting device according to either of Claims 3 and 4, wherein the light sources (22, 24, 26) are equally distributed on a circle centered on the axis of the cylindrical body of the collector.

6. Lighting device according to one of Claims 3 to 5, wherein the capture guides (32, 34, 36) all have substantially the same dimension along the axis of the cylindrical body.

7. Lighting device according to Claim 6, wherein

$$H \geq \frac{3}{2}h,$$

   where

   H is the dimension of the lighting device along the axis of the cylindrical body, and
   h is the distance along the axis of the cylindrical body between the input and output ends of the light capture guides.

8. Lighting device according to any of the preceding claims, comprising at least three light sources (22, 24, 26), each associated with a separate capture guide (32, 34, 36).

9. Lighting device according to any of the preceding claims, wherein each of the light sources comprises at least one light-emitting diode placed facing the associated light guide.

10. Lighting device according to any of the preceding claims, wherein the light sources emit in wavelength ranges which are different from one another.

11. Lighting device according to any of the preceding claims, wherein the angles of the helicoids forming the capture guides (32, 34, 36) are substantially equal to one another and greater than or equal to 40° and less than or equal to 50°.

**12.** Lighting device according to any of the preceding claims, wherein the light collector (40) and the capture guides (32, 34, 36) are made in one piece.

**13.** Illumination source comprising a lighting device (10) according to any of the preceding claims.

**14.** Gear shift knob of a motor vehicle comprising a lighting device (10) according to any of Claims 1 to 12.

**Fig.1**

**Fig.2**

**EP 3 025 094 B1**

## RÉFÉRENCES CITÉES DANS LA DESCRIPTION

### Documents brevets cités dans la description

• US 20070009210 A